# NEUE EUROPÄISCHE PATENTSCHRIFT

(11) **EP 0 130 940 B2**
(45) Veröffentlichungstag und Bekanntmachung des Hinweises auf die Entscheidung über den Einspruch: **01.12.1993**
(45) Hinweis auf die Patenterteilung: 11.01.1989
(21) Anmeldenummer: 84810291.9
(22) Anmeldetag: 14.06.1984
(51) Int. Cl.: B23K 9/02, G01V 3/10

(54) **Induktive Sensoranordnung und Messanordnung zur Verwendung derselben**
Inductive sensor device and measuring device for using the same
Dispositif inductif sensoriel et dispositif de mesure pour son utilisation

(30) Priorität: 05.07.1983 CH 3682/83
(43) Veröffentlichungstag der Anmeldung: 09.01.1985
(73) Patentinhaber: C.A. Weidmüller GmbH & Co., D-32758 Detmold (DE)
(72) Erfinder: Schmall, Karl-Heinz, D-7570 Baden-Baden 19 (DE)
(74) Vertreter: Hepp, Dieter

(56) Entgegenhaltungen:
- DE-A- 2 747 539
- DE-U-82 194 114
- FR-A- 2 267 854
- FR-A- 2 516 250
- US-A- 3 171 071
- US-A- 3 484 667
- TRENNEN + FUEGEN, Heft 10, ISSN-0172-6455, April 1983, S. 42,43
- H. Roeder et al., "Elektronik 1, Grundlagen", Europa-Lehrmittel, Nourney, Vollmer & Co., Wuppertal 1980
- Prospekt "Nahtführungssystem Sensomat hält Schweissbrenner auf Kurs", Fa. Messer Griesheim GmbH, Druck 36.5015, Ausgabe 08/85/II C.A./3350;
- Druckschrift G. Foyer, "Durch Ergänzen um einen Höhensensor führt der Sensomat auch den Schweisskopf dreidimensional" aus TRENNEN + FUEGEN;
- G. Rose, "Formelsammlung für den Radiopraktiker", Franzis-Verlag, München, 8. Auflage, S. 72, 73
- K.-H. Schriever et al., Enzyklopädie der Naturwissenschaft und Technik, Verlag Moderne Industrie, S. 5058

## Beschreibung

Die Erfindung betrifft eine induktive Sensoranordnung gemäss dem Oberbegriff von Patentanspruch 1.

Induktive Sensoranordnungen der genannten Art sind in den verschiedensten Ausführungsformen bekannt und z. B. in der europäischen Patentanmeldung Nr. 7 034 des Anmelders oder der französischen Patentanmeldung Nr. 2,394,783 des Anmelders sowie den dort genannten Entgegenhaltungen beschrieben. Derartige Sensoranordnungen basieren allgemein darauf, dass durch Annäherung an ein nichtmagnetisches oder ferro-magnetisches Material die Induktivität eines Schwingkreises durch magnetische Materialeigenschaften, Dämpfung und/oder Wirbelstrombildung verändert wird, welche in einem bestimmten Bereich eine Funktion des Objektabstands ist. Derartige Sensoranordnungen sind in der Auflösung limitiert und eignen sich insbesondere nicht dazu, Objektunregelmässigkeiten, wie z. B. Spalten, Löcher oder Erhebungen, mit hoher Genauigkeit zu ermitteln. Sie sind vielmehr in der Anwendung beschränkt auf Abstandsmessungen. Aus der DE-A-27 47 539 ist eine Elektrodenanordnung zur Abstandsmessung bei einer Brennerdüse bekannt, bei der Leiterbahnen flächig auf einen Trägerkörper aufgebracht sind. Vorzugsweise ist dabei das untere Ende der Brennerdüse selbst als induktive Ringelektrode ausgebildet. Diese bekannte Elektrodenanordnung eignet sich ausschliesslich zur Abstandsmessung, wobei der Induktivitätswert der Elektrode das Kriterium für die Ermittlung des Abstandswerts bildet.

Die Anordnung eignet sich ebenfalls nicht für komplexere Aufgaben, wie z. B. die Ermittlung der Relativlage in bezug auf eine Objektunregelmässigkeit oder für die Verwendung der Elektrode für mehrere Aufgaben, wie Abstandsmessung und Ermittlung der Relativlage oder Messen mit unterschiedlicher Auflösung.

Aus der FR-A-2 267 854 ist eine Anordnung bekannt, bei welcher das Werkstück in einen magnetischen Kreis mit konventionellem Joch- und Spulen-Aufbau einbezogen ist. Mittels zusätzlicher Magnetfeld-Detektoren wird das Feld im Werkstück gemessen. Zur Abstandsmessung ist eine separate kapazitive Messanordnung vorgesehen.

Die Anordnung ist aufwendig, erfordert separate Schalt- und Regelkreise und ist in der Anwendung auf Schweissnaht-Erfassung begrenzt. Ausserdem ist die Genauigkeit bei nicht planer Werkstückoberfläche begrenzt und verwertbare Messwerte ergeben sich nur, wenn der magnetische Kreis über das Werkstück geschlossen ist, also bei sehr geringen Abständen.

Der Erfindung liegt die Aufgabe zugrunde, die Nachteile des Bekannten zu vermeiden, insbesondere also eine induktive Sensoranordnung zu schaffen, welche hohe Auflösung und Messgenauigkeit erlaubt und auch bei unregelmässiger Oberflächenkonfiguration des Objekts, bei kleinen Objekten oder bei grossem Objektabstand einsetzbar ist. Dabei soll sowohl Abstandsmessung als auch Positionserfassung bei Objekten unterschiedlicher geometrischer Ausbildung ermöglicht werden. Die Sensoranordnung soll ausserdem einfach im Aufbau und störungssicher im Einsatz sein.

Erfindungsgemäss wird dies in erster Linie gemäss kennzeichnendem Teil von Patentanspruch 1 erreicht. Das Auftragen derartiger leitfähiger Schichten auf flächige Substrate, z. B. in Dickfilm- oder Dunnfilmtechnik (durch Verkleben oder Eingiessen), erlaubt praktisch unbeschränkte Möglichkeiten bei der Formgebung der Spulen. Flächige Substrate lassen sich andererseits auf einfachste und vorteilhafteste Weise zu mehrschichtigen Spulenanordnungen gleicher oder verschiedener Funktion « packen » bzw. kombinieren und, bei Auswahl eines geeigneten Materials, auch verformen, insbesondere biegen, und somit der Oberfläche des Objekts anpassen. Durch die erfindungsgemässe Ausbildung lassen sich auch mehrere Spulen auf einem Spulenträger vorsehen, und zwar auf beiden Oberflächen des Spulenträgers. Damit lassen sich z. B. auf einfachste Weise die Empfängerspulen auf der dem Objekt zugewandten Seite des Spulenträgers anbringen und die Senderspule auf der dem Objekt abgewandten Oberfläche des Spulenträgers vorsehen. Dadurch werden nicht nur geringe Bauhöhen, kleine Spulendimensionen und damit hohe Auflösung gewährleistet, sondern es sind auch konstruktionsbedingt Abstandsveränderungen sowohl zwischen den Empfängerspulen untereinander als auch zwischen Empfängerspulen und Senderspule vermieden. Damit werden sowohl herstellungsmässige Toleranzen auf ein Minimum reduziert als auch betriebliche Störungen z. B. durch mechanische Einflüsse vermieden.

Derartige symmetrische Anordnungen eignen sich besonders vorteilhaft zur Spaltnachführung und/oder Zentrierung des Sensors über einer Objektunregelmässigkeit praktisch beliebiger Form und Oberfläche.

Zur Anpassung an Objekte mit unregelmässiger Oberfläche lassen sich vorteilhaft zwei oder mehrere in bezug auf das Objekt nebeneinander angeordnete Spulenträger vorsehen. Durch die Kombination der erfindungsgemässen Massnahmen, d. h. also den Einsatz biegbarer flächiger Substrate und/oder die « Packung » einer Mehrzahl von Spulenträgern hintereinander und/oder die Anordnung von Spulentragern nebeneinander und/oder im Winkel zueinander lasst sich auf bisher nicht erreichbare Weise praktisch jede an einen derartigen induktiven Sensor gestellte Aufgabe lösen.

Durch Ausrichtung der Wicklungsachsen von Sender- und/oder Empfängerspule zum Objekt hin, lässt sich besonders scharfe Abgrenzung der symmetrischen elektromagnetischen Felder, und damit der Genauigkeit der Anordnung erreichen. Durch Anbringen einer zusätzlichen Spule zur Abstandsmessung lässt sich besonders genaue Messung von Relativlage und Abstand zum Objekt erreichen.

Ganz besonders vorteilhaft ist der Einsatz von erfindungsgemässen Sensoranordnungen bei einer Messanordnung zum Ermitteln der Relativlage einer Sensoranordnung zu einem Objekt, wobei die Sensoranordnung wenigstens eine Empfängerspule und eine Senderspule aufweist, und wobei die Senderspule an einem HF-Oszillator und die Empfängerspule an einer Auswertungsschaltung zur Ermittlung von Phasen- und/oder Spannungsänderungen in Abhängigkeit von Aen derungen der Relativlage von Objekt und.Sensoranordnung angeschlossen sind. Zur Erhöhung der Auflösung und/oder zur Anpassung an spezifische Messanforderungen oder Objekte wird dabei erfindungsgemäss vorgeschlagen, dass wenigstens die Empfängerspule in wenigstens zwei Teilspulen unterteilt ist, und dass eine Umschalteinrichtung zum wahlweisen Anschluss der einen und/oder der anderen Teilspule an die Auswertungsschaltung vorgesehen ist. Wenn die Teilspulen dabei unterschiedlich wirksame Spulenflächen in bezug auf das Objekt aufweisen, lässt sich z. B. die Spule mit der grösseren Oberfläche zur Erreichung eines grossen Fangbereichs während der Objektannäherung mit der Auswertungsschaltung verbinden, während die Spule mit der kleineren wirksamen Spülenfläche nach erfolgter Annäherung mit der Auswertungsschaltung verbunden wird, um hohe Auflösung und Führungsgenauigkeit zu gewährleisten. Es ist auch denkbar, die Spulenflächen mittels der Umschalteinrichtung in Abhängigkeit von der gestellten Aufgabe beliebig in Serie oder gegeneinander zu schalten, z. B. um einerseits Abstandsmessung oder andererseits Messung der Relativlage zu einer Objektunregelmässigkeit durchzuführen.

Die Verwendung einer Umschalteinrichtung zum Umschalten der Teilspulen füht ersichtlicherweise bereits an sich zu einer wesentlichen Verbesserung derartiger Messanordnungen. Dadurch lässt sich sowohl die Anzahl der erforderlichen Spulen reduzieren als auch ggf. die Auswertungsschaltung insofern vereinfachen. als eine einzige Auswertungsschaltung abwechselnd oder zyklisch sowohl zur Abstandsmessung als auch zur Messung der seitlichen Relativlage in bezug auf Objektunregelmassigkeiten verwendet werden kann. Die Verwendung der erfindungsgemässen induktiven Sensoranordnung in Verbindung mit der Messanordnung mit Umschalteinrichtung ergibt aufgrund der universellen Anwendbarkeit. der mechanischen Stabilitat sowie der Unempfindlichkeit gegen mechanische Einflüsse besonders herausragende Ergebnisse.

Die Erfindung ist im folgenden in Ausführungsbeispielen anhand der Zeichnungen naher erläutert. Es zeigen :
Figur 1a die Seitenansicht einer induktiven Sensoranordnung an einer automatisch gesteuerten Schutzgas-Schweissdüse in schematischer Darstellung,
Figur 1b die Sensoranordnung gemäss Figur 1 von unten,
Figur 2a eine induktive Sensoranordnung mit mehreren Teilspulen,
Figur 2b eine Sensoranordnung analog Figur 2a, jedoch mit anderer Spulenform,
Figur 2c eine Messanordnung mit den Merkmalen der Erfindung unter Verwendung der Sensoranordnung gemäss Figur 2b,
Figur 3 eine Messanordnung mit Umschalteinrichtung und umschaltbarer Sensoranordnung in schematischer Darstellung,
Figur 4a eine ringförmige Sensoranordnung mit vier punktsymmetrisch angeordneten Teilspulen,
Figur 4b die Sensoranordnung gemäss Figur 4a in der Seitenansicht,
Figur 5 eine Sensoranordnung mit gekrümmtem Spulenträger in schematischer Darstellung,
Figur 6 eine Sensoranordnung mit zwei im Winkel zueinander angeordneten Spulenträgern in schematischer Darstellung,
Figur 7a eine Sensoranordnung mit zwei geschichteten Spulenträgern in schematischer Darstellung,
Figur 7b die Sensoranordnung gemäss Figur 7a in Seitenansicht mit verbundenen Spulenträgern,
Figur 8a die Draufsicht auf eine Sensoranordnung mit einer Mehrzahl von Teilspulen sowie zwei kapazitiven Hilfs-Elektroden in schematischer Darstellung,
Figur 8b einen Schnitt längs der Linie A-A in Figur 8a,
Figur 9 zeigt schematisch ein Ausführungsbeispiel einer erfindungsgemässen Messanordnung. Der Sensor weist dabei eine Senderspule 1 sowie die Empfängerteilspulen 4a, 4b und 4c auf.
Figur 9a eine Messanordnung mit Umschalteinrichtung und umschaltbaren Teilspulen,
Figur 10 die Darstellung der jeweils wirksam zusammengeschalteten Teilspulen in den Positionen I und II gemäss Figur 9.

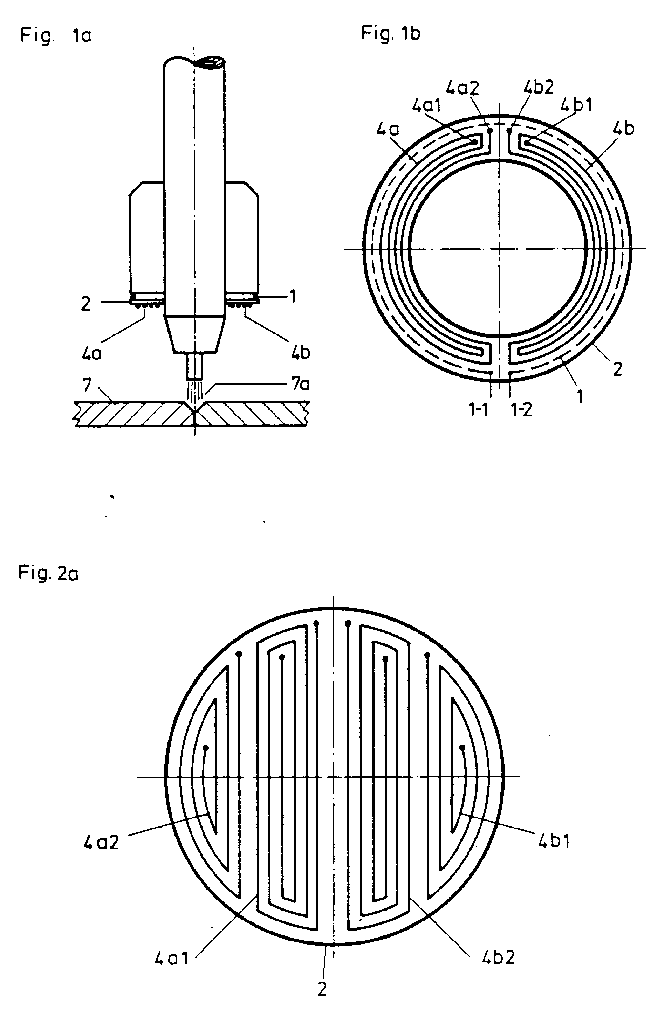

Gemäss Fig. 1a und 1b ist um eine nur in Umrissen dargestellte Schutzgas-Schweissd üse. wie sie an automatisch angetriebenen Schweissanlagen gebräuchlich sind, eine induktive Sensoranordnung mit einem ringförmigen Spulenträger 2 vorgesehen, auf welchem in Dickfilmtechnik auf der Oberseite eine Senderspule 1 und auf der Unterseite eine erste Empfängerteilspule 4a und eine zweite Empfängerteilspule 4b angeordnet sind. Die Empfängerteilspulen 4a und 4b sind axialsymmetrisch ausgebildet und liegen über den beiden Hälften einer durch einen Schnitt unterbrochenen Platte 7. Durch die Senderspule 1 wird ein elektromagnetisches Feld erzeugt, welches in der Platte 7 Wirbelströme hervorruft, die ihrerseits die Teilspulen 4a und 4b beeinflussen. Aufgrund der Symmetrie der beiden Empfängerteilspulen 4a und 4b werden diese ersichtlicherweise identisch beeinflusst, solange sich die Schutzgas-Schweissdüse und mit ihr die Anordnung aus Senderspule 1 und Empfänger-Teilspulen 4a und 4b mittig über dem Schnitt 7a in der Platte 7 befinden. Sobald jedoch ein Mittenversatz auftritt, werden die Teilspulen unterschiedlich beeinflusst und es tritt an den Ausgängen 4a-1, 4a-2 bzw. 4b-1, 4b-2 eine in der Phasenlage und/oder Amplitude unterschiedliche Ausgangsspannung auf, die in an sich bekannter Weise ausgewertet und zur Abgabe eines dem Mittenversatz proportionalen Signals verwendet werden kann.

Durch die Ausbildung des Spulenträgers 2 als Ringscheibe mit relativ dünner Spulen-Beschichtung lässt sich die Gesamtanordnung ausserordentlich kompakt und auch nahe an der Schweisszone anbringen, was grosse Messgenauigkeit gewährleistet. Dabei ermöglicht die Dickschichttechnik oder die Dünnfilmtechnik auf Keramiksubstraten hohe Umgebungstemperaturen.

Figur 2a zeigt eine Sensoranordnung, bei welcher auf einem Spulenträger 2 vier Empfängerteilspulen 4a₁, 4a₂, 4b₁, 4b₂ angeordnet sind. Die Teilspulen 4a-1 und 4a-2 sind dabei axialsymmetrisch zu den Teilspulen 4b-1 und 4b-2 angeordnet. Aufgrund des grösseren Abstands der Teilspulen 4a-2 und 4b-2 von der Symmetrieachse ergibt sich ersichtlicherweise ein grösserer « Fangbereich » bei der Annäherung an eine Objektunregelmässigkeit, z. B. einen Schnitt 7a gemäss Figur 1a. Das heisst, dass bei einer Annäherung der Sensoranordnung an den Schnitt 7a (z. B. von oben) zunächst durch Auswertung der von den aussen liegenden Teilspulen 4a-2 und 4b-2 mit grosser Sicherheit die durch den Spalt 7a bewirkte Unregelmässigkeit in der Beeinflussung des von der Senderspule 1 abgegebenen HF-Felds « aufgespürt » werden kann. Sobald die Sensoranordnung im Nahbereich über dem Schnitt 7a plaziert ist, sollten jedoch die Teilspulen näher an der Objektunregelmässigkeit, d. h. am Schnitt 7a plaziert sein. Zu diesem Zweck können dann die von den innen liegenden Teilspulen 4a₁ und 4b₁ abgegebenen Signale ausgewertet werden, wodurch höchste Nachführgenauigkeit erreichbar ist.

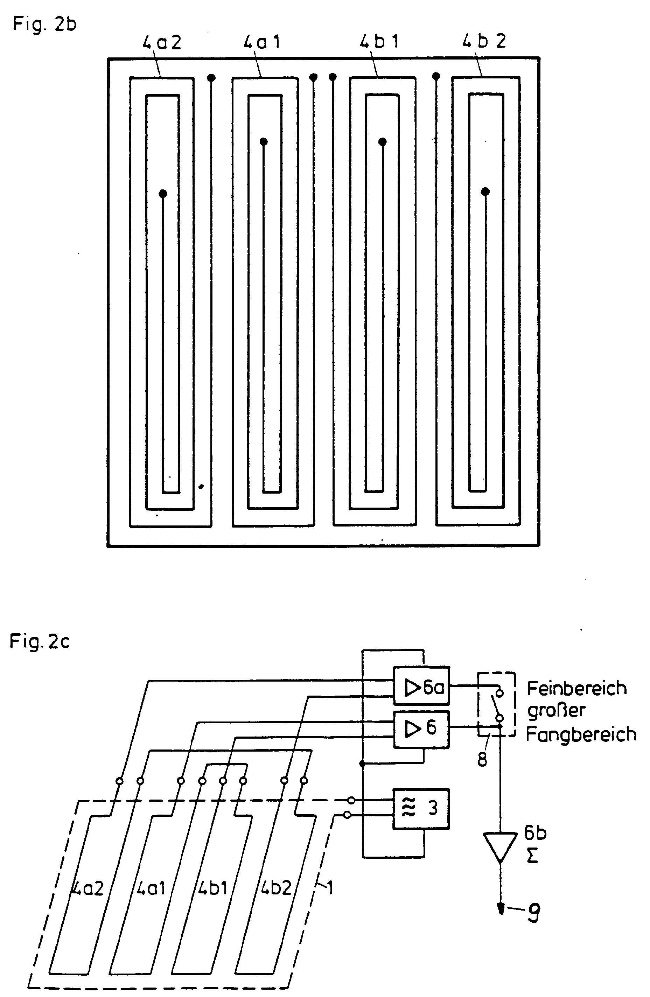

Figur 2b zeigt ein Ausführungsbeispiel analog Figur 2a, jedoch mit rechteckig verlaufenden Bahnen der Teilspulen 4a-1, 4a-2, 4b-1, 4b-2. Figur 2c zeigt das Blockdiagramm einer Messanordnung, in welcher die von der Sensoranordnung gemäss Figur 2a oder 2b abgegebenen Signale ausgewertet werden können. Dabei wird die Senderspule 1 durch einen HF-Oszillator 3 erregt. Die Empfängerteilspulen 4a-1 und 4b-1 sind im Wicklungssinn gegeneinander geschaltet und an den Eingang eines ersten Verstärkers 6 geschaltet. Durch die Gegeneinanderschaltung der Teilspulen 4a-1 und 4b-1 heben sich deren Ausgangsspannungen auf, solange sie symmetrisch durch das Objekt beeinflusst werden. Sobald jedoch Unsymmetrie auftritt, d. h. sobald z. B. der Schnitt 7a nicht mehr exakt mit der Symmetrieachse der Spulenanordnung fluchtet, wird eine der beiden Teilspulen aufgrund des Schnitts schwächer und die andere stärker beeinflusst. Der Verstärker 6 ist als Amplituden- und/oder Phasenvergleicher ausgebildet und erhält eine Referenzspannung vom HF-Oszillator 3. Jede Unsymmetrie in den Teilspulen 4a-1, 4b-1 führt zu einer Amplituden- und/oder Phasenverschiebung des resultierenden Signals, so dass am Ausgang des Verstärkers 6 ein Signal erzeugt wird. In gleicher Weise sind die aussen liegenden Empfängerteilspulen 4a-2, 4b-2 gegeneinander geschaltet und mit dem Eingang eines Verstärkers 6a verbunden, der ebenfalls als Phasenvergleicher ausgebildet und über einen Referenzeingang mit dem HF-Oszillator verbunden ist. Die beiden Verstärker 6 und 6a sind ausgangsseitig mit einer Umschalteinrichtung 8 verbunden. Solange die Umschalteinrichtung 8 offen ist, d. h. solange nur der Ausgang des Verstärkers 6 über die Umschalteinrichtung 8 an einen Summenverstärker 6b geschaltet ist, resultiert das am Ausgang 9 der Messanordnung anliegende Signal lediglich aus dem Mess-Signal der innen liegenden Teilspulen 4a-1 und 4b-1. Dadurch wird erreicht, dass aufgrund der kleinen, in bezug auf das Objekt wirksamen Spulenfläche bereits die kleinste Abweichung zu einer auswertbaren Änderung der Symmetrieverhältnisse führt. Ist dagegen die Umschalteinrichtung 8 geschlossen, wird der Ausgang des Verstärkers 6a ebenfalls an den Eingang des Summenverstärkers 6b gelegt, wodurch auch das von den aussen liegenden Teilspulen 4a-2 und 4b-2 resultierende Signal zum Summensignal am Ausgang 9 beiträgt. Durch die grössere wirksame Spulenfläche der Gesamtanordnung aller Teilspulen 4a-1 bis 4b-2 wird in dieser Schaltstellung der Umschalteinrichtung 8 ein grosser Fangbereich der Messanordnung gewährleistet, der auch in grossem Abstand vom Objekt 7 noch in der Lage ist, Objektunregelmässigkeiten auswertbar zu « erkennen ». Ganz besonders vorteilhaft lässt sich dabei eine Art « Landschaftsbild », d. h. ein Bild vom Objekt unter der Sensoranordnung erhalten, wenn eine Mehrzahl derartiger Teilspulen vorgesehen wird. Dabei lässt sich stufenweise die Spulenfläche verkleinern oder vergrössern. Vorteilhaft kann das Umschalten durch eine sequentielle Schaltanordnung (Scanner) erfolgen, wobei die Messwerte der einzelnen Schaltstufen z. B. durch Mikroprozessoren verarbeitet werden können.

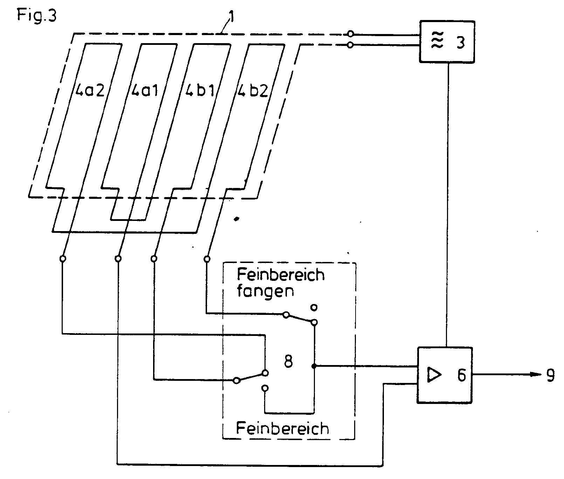

Figur 3 zeigt ein Ausführungsbeipiel einer Messanordnung, welches analog der Anordnung gemäss Figur 2c aufgebaut ist. Im Unterschied zur derzeit beschriebenen Anordnung ist lediglich die Umschalteinrichtung 8 direkt an den Ausgang der Empfängerteilspulen 4a-1, 4a-2, 4b-1, 4b-2 gelegt, so dass die Umschaltung in eine Position mit grossem Fangbereich und eine zweite Position mit grossem Auflösungsvermögen vor dem Verstärker 6 stattfindet. Dabei werden ersichtlicherweise die von den Empfängerteilspulen 4a-1 bis 4b-2 abgeleiteten Signale unmittelbar einander gegengeschaltet, was zum gleichen Ergebnis führt wie die Schaltung gemäss Figur 2c.

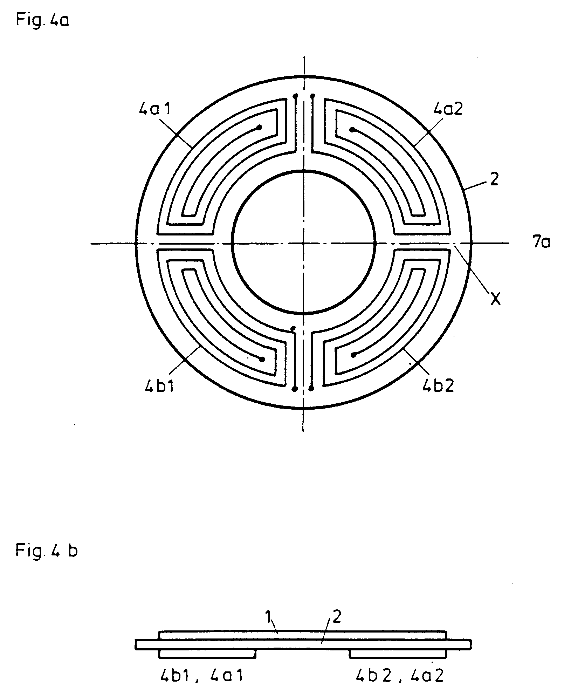

Figur 4a zeigt eine induktive Sensoranordnung mit kreisringförmigen Teilspulen 4a-1, 4a-2, 4b-1 und 4b-2. Die Senderspule 1 ist auf der Oberseite des Spulenträgers 2 angeordnet (Figur 4b). Die dargestellte Sensoranordnung erlaubt ersichtlicherweise je nach Auswertung der von den Empfängerteilspulen 4a-1, 4a-2, 4b-1, 4b-2 abgegebenen Signale eine Aussage über die Relativlage der Symmetrieachse X des Spulenträgers 2 zum Spalt 7a, als auch die Bestimmung der Relativlage zu einer punktförmigen Objektunregelmässigkeit. Dies wird durch Vergleich der Ausgangssignale der jeweils diagonal gegenüberliegenden Paare von Empfängerteilspulen 4a-1, 4b-2 und 4a-2, 4b-1 ermöglicht.

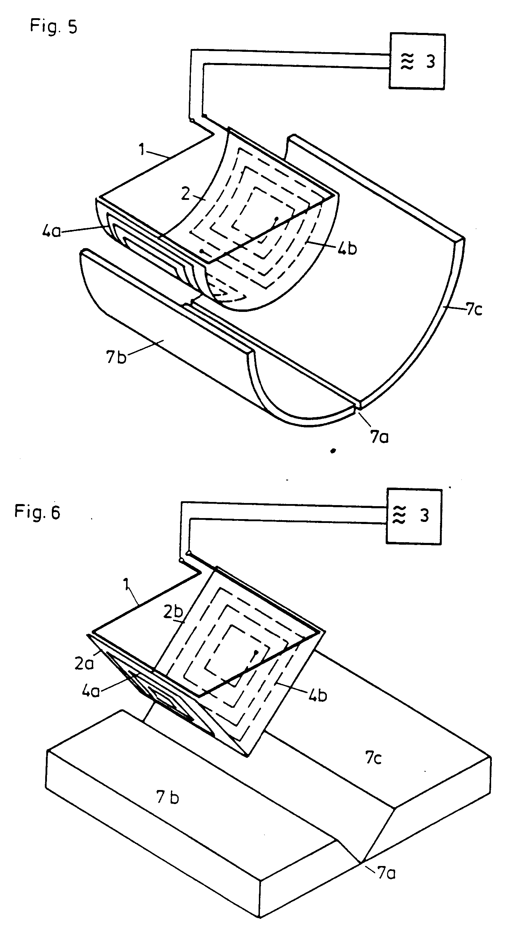

Figur 5 zeigt ein Ausführungsbeispiel, bei welchem der Spulenträger 2 aus einem biegsamen Material gefertigt und damit der gekrümmten Oberfläche von zwei Metallstreifen 7b und 7c anpassbar ist.

Figur 6 zeigt ein Ausführungsbeispiel, bei welchem zwei Spulenträger 2a und 2b im Winkel zueinander angeordnet sind, um der Oberflächenform zweier Metallteile 7b und 7c angepasst zu sein. Die Ausführungsbeispiele zeigen die universelle Anwendbarkeit der erfindungsgemässen Sensoranordnung. Bei den gezeigten Varianten kann je nach Anwendungsfall, Betriebsbedingungen etc. ein Spulenträger aus biegsamem Isoliermaterial, Keramik, Glas etc. Verwendung finden. Dem Fachmann sind geeignete Werkstoffe geläufig.

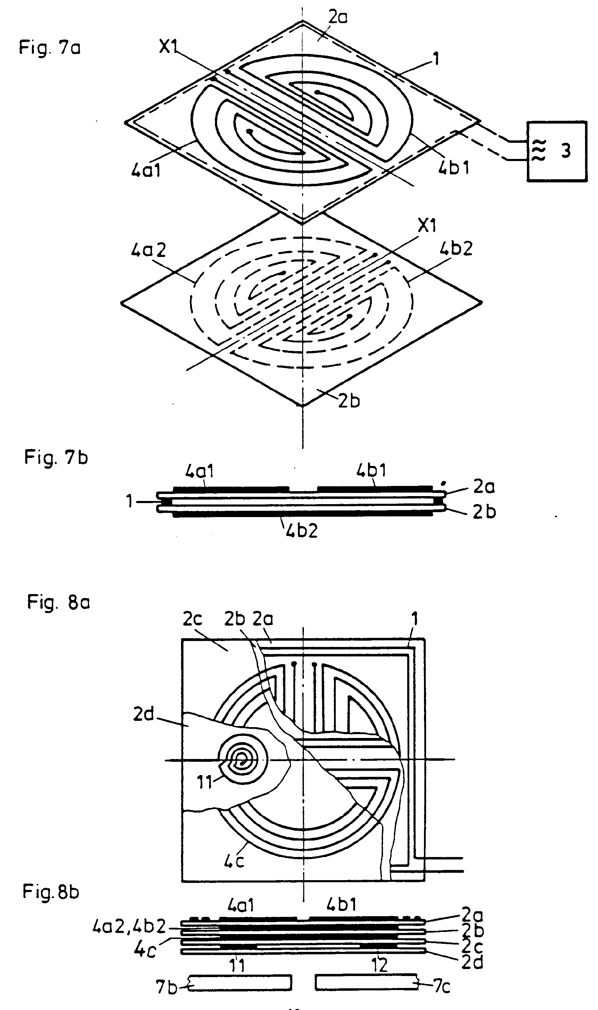

Figur 7a und 7b zeigen auf eindrückliche Weise, wie sich durch « Packen », d. h. also stapelartige Verbindung verschiedener Spulenträger, eine Sensoranordnung weiter verbessern lässt. Um deutliche Darstellung zu ermöglichen, sind in Figur 7a zwei Spulenträger 2a und 2b im Abstand voneinander dargestellt. In der endgültigen Einbaulage sind die beiden Spulenkörper 2a und 2b jedoch miteinander verklebt und fest verbunden, wie dies aus Figur 7b ersichtlich ist. Beide Spulenträger 2a und 2b weisen Empfängerteilspulen 4a-1, 4b-1, bzw. 4a-2, 4b-2 auf, die jeweils etwa D-förmig und axialsymmetrisch in Dünnfilmtechnik auf die Spulenträger 2 aufgetragen sind. Die Symmetrieachsen X1 und X2 verlaufen dabei senkrecht zueinander und halbieren sich. Dadurch werden die Empfängerteilspulen durch die Senderspule 1 bzw. Asymmetrien des Objekts (nicht dargestellt) beeinflusst. wie beim Ausführungsbeispiel gemäss Figur 7b. Dabei ist jedoch aufgrund der Spulenform (D-Form) bessere Signalauflösung gegeben als bei der Anordnung von Einzelspulen, bei welchen die parallel zur Symmetrieachse verlaufenden Windungsabschnitte relativ kurz sind.

Fig. 8a und 8b zeigen ein abgewandeltes Ausführungsbeispiel einer Sensoranordnung mit vier Spulenträgern 2a, 2b, 2c und 2d. Analog dem Ausführungsbeispiel gemäss Figur 7 sind auf den Spulenträgern 2a und 2b die Senderspule 1 sowie Empfängerteilspulen 4a-1. 4b-1, 4a-2 und 4b-2 in D-Form angeordnet. Auf dem dritten Spulenträger 2c ist noch zusätzlich eine ringförmige dritte Empfängerteilspule 4c vorgesehen, welche zur Abstandsmessung zwischen Sensoranordnung und Objekt verwendet werden kann. Zusätzlich sind auf einem vierten Spulenträger 2d noch zwei als Kondensatorflächen dienende kreisförmige Leiter 11, 12 aufgebracht, die in bekannter Weise an eine Einrichtung zur kapazitiven Abstandsmessung zwischen der Sensoranordnung und dem Objekt angeschlossen werden können. Diese kapazitiven Elektroden 11, 12 können dazu dienen, individuell den Abstand der Sensoranordnung zu Objektteilen 7b, 7c mit Höhenversatz zu messen. Die Kondensatorelektroden 11 und 12 sind, wie aus Figur 8b ersichtlich ist. auf der Rückseite des untersten Spulenträgers 2d angeordnet und damit geschützt. Die Gesamtanordnung aus der beschriebenen Vielzahl von Teilspulen sowie der auf optimal einfache Weise integrierten Kondensatorelektrode ist ausserordentlich kompakt, betriebssicher und erlaubt die Herstellung von universell einsetzbaren Sensoranordnungen mit höchster Auflösung.

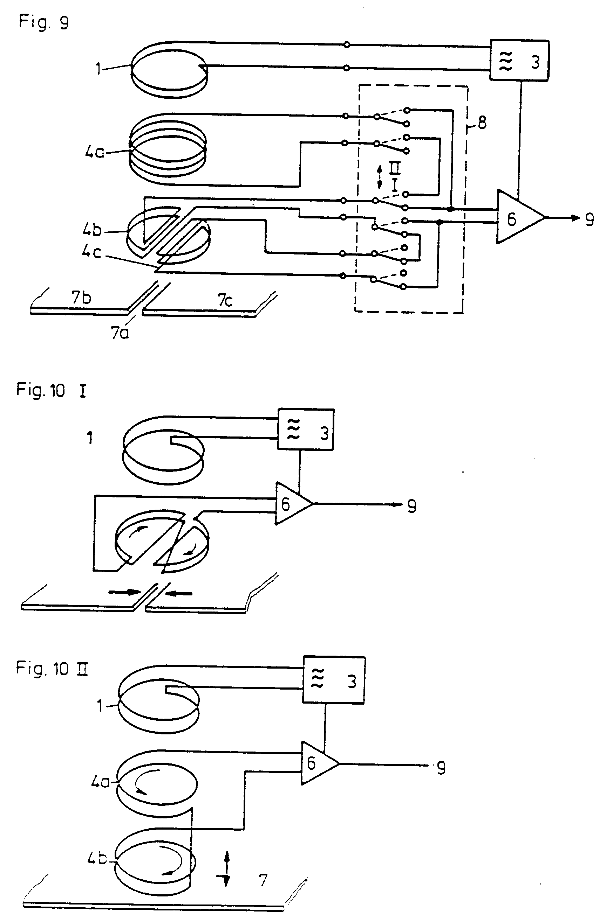

Figur 9 zeigt schematisch ein Ausführungsbeispiel einer erfindungsgemässen Messanordnung. Der Sensor weist dabei eine Senderspule 1 sowie die Empfängerteilspulen 4a, 4b und 4c auf.

Gemäss Figur 9 sind die Teilspulen 4a, 4b und 4c ausgangsseitig mit einer Umschalteinrichtung 8 verbunden. Die Umschalteinrichtung 8 bewirkt, dass in der ausgezogen gezeichneten Stellung I die beiden Empfängerteilspulen 4b und 4c in der vorstehend beschriebenen Weise durch das Wechselfeld der Senderspule 1 beeinflusst werden. Dadurch lässt sich mittels der Sensoranordnung der Schnitt 7a zwischen den beiden Metallteilen 7b und 7c in seiner Relativlage zu den Empfängerteilspulen 4b und 4c ermitteln. Dementsprechend liegt in der Stellung I der Umschalteinrichtung 8 am Ausgang 9 des Verstärkers 6 ein Signal an, welches den Seitenversatz der Sensoranordnung zum Schnitt 7a anzeigt. Dies ist schematisch in der Darstellung I gemäss Figur 10 ersichtlich. Wird die Umschalteinrichtung 8 dagegen in die Position II gelegt, dann werden die erste Empfängerteilspule 4a und die zweite Empfängerteilspule 4b gegeneinander geschaltet. Das resultierende Signal dieser beiden Teilspulen ist jedoch vom vertikalen Abstand der beiden Empfängerteilspulen 4a und 4b vom Metallteil 7 abhängig, so dass in der Position II am Ausgang 9 des Verstärkers 6 ein zur Höhe bzw. zum vertikalen Abstand der Sensoranordnung zum Metallteil 7 proportionales Signal anliegt. Durch die Einbeziehung der Umschalteinrichtung 8 lässt sich ersichtlicherweise unter Verwendung einer einzigen Auswertungsanordnung (Verstärker 6) sowohl ein abstandsproportionales als auch ein dem Seitenversatz zu Objektunregelmässigkeiten proportionales Ausgangssignal am Ausgang 9 erzielen. Diese ausserordentlich ökonomische und einfache Funktion wird insbesondere auch dadurch gefördert, dass sich die Empfängerteilspulen 4a, 4b, 4c sowie die Senderspule 1 in der vorstehend beschriebenen Weise auf engstem Raum und in beliebigen Varianten herstellen und « packen » lassen.

## Patentansprüche

1. Induktive Sensoranordnung mit Oszillator
zur Ermittlung des Abstands und der Relativlage einer Mehrzahl von Empfängerspulen in bezug auf eine Unregelmässigkeit, wie einen Spalt oder eine Kante eines metallischen Objekts,
in die ein in Phasenlage und/oder Amplitude durch die jeweilige Relativlage vom Objekt zur Sensoranordnung beeinflusster Wechselstrom induziert wird, dadurch gekennzeichnet,
dass alle Empfängerspulen (4) durch ein gemeinsames elektromagnetisches HF-Induktionsfeld einer Senderspule (1) und durch die von diesem HF-Feld im Objekt erzeugten Wirbelströme beeinflussbar sind,
dass die Senderspule durch eine HF-Oszillator (3) gespeist wird und die Spulen HF-Spulen sind,
dass wenigstens zwei der vom elektromagnetischen HF-Feld beeinflussten Empfängerspulen (4) zur Ermittlung des Seitenversatzes der Objektunregelmässigkeit vorgesehen sind,
dass eine weitere vom elektromagnetischen HF-Feld beeinflusste Hilfts-Empfängerspule (4c, Fig. 8a und 8b; 4a, Fig. 9) zur Ermittlung des Abstands zum Objekt vorgesehen ist,
wobei die Senderspule, die Empfängerspulen und die Hilfs-Empfängerspule symmetrisch zu einer gemeinsamen, auf die Unregelmässigkeit ausrichtbaren Symmetrieebene oder -achse, bzw. zu einen gemeinsamen, auf die Unregelmässigkeit ausrichtbaren Symmetriepunkt angeordnet sind, und
dass wenigstens eine der Spulen (1, 4) als metallische Schicht auf die Oberfläche eines flächigen Spulenträgers (2) aufgetragen ist.

2. Induktive Sensoranordnung nach Anspruch 1 dadurch gekennzeichnet, dass der Spulenträger (2) auf seiner Oberseite und seiner Unterseite mit den Empfängerspulen (4) und/oder der Senderspule (1) beschichtet ist.

3. Induktive Sensoranordnung nach Anspruch 1 oder 2, dadurch gekennzeichnet, dass wenigstens zwei mit Empfängerspulen (4) und/oder einer Senderspule (1) beschichtete Spulenträger (2a, 2b, 2c, 2d) übereinander geschichtet sind, wobei die Spulen gegeneinander isoliert sind.

4. Induktive Sensoranordnung nach einem der vorangehenden Ansprüche, dadurch gekennzeichnet, dass der Spulenträger (2) aus einem verformbaren, insbesondere biegbaren Material besteht.

5. Induktive Sensoranordnung nach einem der vorangehenden Ansprüche, dadurch gekennzeichnet, dass wenigstens zwei in bezug auf das Objekt nebeneinander angeordnete Spulenträger (2a, 2b) vorgesehen sind.

6. Induktive Sensoranordnung nach einem der vorangehenden Ansprüche, dadurch gekennzeichnet, dass der Spulenträger (2) eine aus elektrisch nicht leitfähigem Material bestehende Scheibe ist.

7. Induktive Sensoranordnung nach einem der vorangehenden Ansprüche, dadurch gekennzeichnet, dass die Spulen (1, 4) in Dickfilmtechnik aufgetragen sind.

8. Induktive Sensoranordnung nach einem der vorangehenden Ansprüche, dadurch gekennzeichnet, dass die Spulen (1, 4) in Dünnfilmtechnik aufgetragen sind.

9. Induktive Sensoranordnung nach einem der vorangehenden Ansprüche, dadurch gekennzeichnet, dass wenigstens zwei Empfänger-Spulen (4) als Ringsegmente ausgebildet sind.

10. Induktive Sensoranordnung nach Anspruch 9, dadurch gekennzeichnet, dass vier Teilspulen (4) als Ringsegmente ausgebildet und in zwei Paaren mit senkrecht zueinander stehenden Symmetrieachsen (X1) hintereinander - bezogen auf das Objekt - angeordnet sind.

11. Induktive Sensoranordnung nach Anspruch 10, dadurch gekennzeichnet, dass die Spulenpaare (4) auf der Vorderseite und der Rückseite eines Spulenträgers (2) angeordnet sind.

12. Induktive Sensoranordnung nach Anspruch 9 bis 11, dadurch gekennzeichnet, dass die Teilspulen (4) jeweils wenigstens einen etwa parallel zur Symmetrieebene verlaufenden Windungsabschnitt aufweisen.

13. Messanordnung mit einer induktiven Sensoranordnung gemäss einem der vorangehenden Ansprüche, zum Ermitteln der Relativlage der Sensoranordnung zu einem Objekt, wobei die Empfängerspulen an einer Auswertungsschaltung zur Ermittlung von Phasen- und/oder Spannungsänderungen in Abhängigkeit von Aenderungen der Relativlage von Objekt und Sensoranordnung angeschlossen sind, dadurch gekennzeichnet, dass die Empfängerspulen (4) in wenigstens zwei Teil-Spulen unterteilt sind, und dass eine Umschalteinrichtung (8) zum wahlweisen Anschluss der einen und/oder der anderen Teilspule an die Auswertungsschaltung (Verstärker 6, Summenverstärker 6b) vorgesehen ist.

14. Messanordnung nach Anspruch 13, dadurch gekennzeichnet, dass die Teilspulen (4) unterschiedlich wirksame Spulenflächen in bezug auf das Objekt (7) aufweisen.

15. Messanordnung nach Anspruch 13 oder 14 zur Messung des Abstands von Sensoranordnung und Objektoberfläche sowie zur Messung der seitlichen Relativlage von Sensoranordnung und einer Objekt-Unregelmässigkeit, dadurch gekennzeichnet, dass die Empfängerspulen (4) wenigstens ein Paar Teilspulen aufweisen, welche symmetrisch im Abstand zueinander angeordnet sind, dass die Hilfs-Empfängerspule (4a/Fig. 9) in einem anderen Abstand zum Objekt (7) angeordnet ist als die Teilspulen, und dass die Umschalteinrichtung (8) in zwei verschiedenen Messpositionen derart schaltbar ist, dass einerseits zur seitlichen Relativlagemessung die von den Teilspulen direkt oder indirekt erhaltenen Signale gegeneinander geschaltet und an den Eingang der Auswertungseinrichtung (Verstärker 6) abgegeben werden, und dass andererseits zur Abstandsmessung die von wenigstens einer der Teilspulen oder aber die direkt oder indirekt von beiden Teilspulen erhaltenen Signale in Serie, jedoch gegen die von der Hilfsspule erhaltenen Signale geschaltet und an den Eingang der Auswertungsschaltung abgegeben werden.

16. Messanordnung nach einem der Anspruche 13 bis 15, dadurch gekennzeichnet, dass eine Mehrzahl von Teilspulen (4) vorgesehen ist, und dass als Umschalteinrichtung (8) eine automatisch aktivierbare, insbesondere sequentielle Schaltanordnung (Scanner) vorgesehen ist.

## Claims

1. An inductive sensor arrangement with oscillator for determining the distance and the relative position of a plurality of receiver coils in relation to an irregularity such as a gap or an edge of a metallic object, in which there is induced an alternating current which is influenced in phase position and/or amplitude by the respective relative position from the object to the sensor arrangement, characterised in that all receiver coils (4) can be influenced by a common electromagnetic HF-induction field of a transmitter coil (1) and by the eddy currents produced by said HF-field in the object, that the transmitter coil is fed by an HF-oscillator (3) and the coils are HF-coils, that there are provided at least two receiver coils (4) which are influenced by the electromagetic HF-field, for determining the lateral displacement of the object irregularity, that there is provided a further auxiliary receiver coil ( 4c, Figures 8a and 8b; 4a, Figure 9) which is influenced by the electromagnetic HF-field, for ascertaining the spacing relative to the object, wherein the transmitter coil, the receiver coils and the auxiliary receiver coil are arranged symmetrically relative to a common plane or axis of symmetry which can be aligned with the irregularity or relative to a common point of symmetry which can be aligned with the irregularity, and that at least one of the coils (1, 4) is applied as a metallic layer to the surface of a flat coil support (2).

2. An inductive sensor arrangement according to claim 1 characterised in that the coil support (2) is covered on its upper side and on its underside with the receiver coils (4) and/or the transmitter coil (1).

3. An inductive sensor arrangement according to claim 1 or claim 2 characterised in that at least two coil supports (2a, 2b, 2c, 2d) which are covered with receiver coils (4) and/or a transmitter coil (1) are layered one over the other, wherein the coils are insulated with respect to each other.

4. An inductive sensor arrangement according to one of the preceding claims characterised in that the coil support (2) consists of a deformable, in particular bendable, material.

5. An inductive sensor arrangement according to one of the preceding claims characterised in that there are provided at least two coil supports (2a, 2b) which are arranged adjacent to each other in relation to the object.

6. An inductive sensor arrangement according to one of the preceding claims characterised in that the coil support (2) is a disc consisting of electrically non-conductive material.

7. An inductive sensor arrangement according to one of the preceding claims characterised in that the coils (1, 4) are applied by a thick film technique.

8. An inductive sensor arrangement according to one of the preceding claims characterised in that the coils (1, 4) are applied by a thin film technique.

9. An inductive sensor arrangement according to one of the preceding claims characterised in that at least two receiver coils (4) are constructed as ring segments.

10. An inductive sensor arrangement according to claim 9 characterised in that four fractional coils (4) are constructed as ring segments and are arranged in two pairs with axes of symmetry (X1) disposed perpendicularly to each other in series, relative to the object.

11. An inductive sensor arrangement according to claim 10 characterised in that the pairs of coils (4) are arranged on the front side and the reverse side of a coil support (2).

12. An inductive sensor arrangement according to claims 9 to 11 characterised in that the fractional coils (4) have in each case at least one winding portion which extends approximately parallel to the plane of symmetry.

13. A measuring arrangement having an inductive sensor arrangement according to one of the preceding claims for determining the relative position of the sensor arrangement with respect to an object, wherein the receiver coils are connected to an evaluation circuit to determine changes in phase and/or voltage in dependence on changes in the relative position of the object and the sensor arrangement, characterised in that the receiver coils (4) are divided into at least two fractional coils and that there is provided a change-over switching device (8) for the selective connection of one and/or the other fractional coil to the evaluation circuit (amplifier 6, summing amplifier 6b).

14. A measuring arrangement according to claim 13 characterised in that the fractional coils (4) have differently effective coil surfaces in relation to the object (7).

15. A measuring arrangement according to claim 13 or claim 14 for measuring the spacing of the sensor arrangement and the surface of the object and for measuring the lateral relative position of the sensor arrangement and an irregularity of the object characterised in that the receiver coils (4) have at least one pair of fractional coils which are arranged symmetrically at a spacing relative to each other, that the auxiliary receiver coil (4a, Figure 9) is arranged at a different spacing relative to the object (7) than the fractional coils, and that the change-over switching device (8) can be switched into two different measuring positions in such a way that on the one hand for lateral relative position measurement purposes the signals obtained directly or indirectly from the fractional coils are connected in opposite relationship and outputted to the input of the evaluation device (amplifier 6) and that on the other hand for distance measuring purposes the signals produced by at least one of the fractional coils or the signals produced directly or indirectly by both fractional coils are connected in series but in opposition to the signals obtained from the auxiliary coil and are outputted to the input of the evaluation circuit.

16. A measuring arrangement according to one of claims 13 to 15 characterised in that there is provided a plurality of fractional coils (4) and that provided as the change-over switching device (8) is an automatically activatable, in particular sequential switching arrangement (scanner).

## Revendications

1. Dispositif inductif de détection comportant un oscillateur, pour déterminer la distance et la position relative d'une multiplicité de bobines réceptrices par rapport à une irrégularité telle qu'une fente ou une arête d'un objet métallique, dans lequel est induit un courant alternatif dont la position de phase et/ou l'amplitude sont influencées par la position relative respective de l'objet par rapport au dispositif de détection, caractérisé en ce que toutes les bobines réceptrices (4) peuvent être influencées par un champ d'induction HF électromagnétique commun d'une bobine émettrice (1) et par les courants tourbillonnaires générés par ce champ HF dans l'objet, en ce que la bobine émettrice est alimentée par un oscillateur HF (3) et les bobines sont des bobines HF, en ce qu'au moins deux des bobines réceptrices (4) influencées par le champ HF électromagnétique sont prévues pour déterminer le déport latéral de I'irrégularité de l'objet, en ce qu'il est prévu, pour déterminer la distance par rapport à l'objet, une autre bobine réceptrice auxiliaire (4c, figures 8a et 8b ; 4a, figure 9) influencée par le champ HF électromagnétique, étant précisé que la bobine émettrice, les bobines réceptrices et la bobine réceptrice auxiliaire sont disposées symétriquement par rapport à un plan ou un axe de symétrie commun apte à être dirigé vers l'irrégularité, ou à un point de symétrie commun apte à être dirigé vers l'irrégularité, et en ce que l'une au moins des bobines (1, 4) est appliquée sous la forme d'une couche métallique sur la surface d'un porte-bobine plat (2).

2. Dispositif inductif de détection selon la revendication 1, caractérisé en ce que le porte-bobine (2) est revêtu, sur sa face supérieure et sur sa face inférieure, des bobines réceptrices (4) et/ou de la bobine émettrice (1).

3. Dispositif inductif de détection selon la revendication 1 ou 2, caractérisé en ce qu'au moins deux porte-bobine (2a, 2b, 2c, 2d) revêtues de bobines réceptrices (4) et/ou d'une bobine émettrice (1) sont disposées en couches l'un au-dessus de l'autre, les bobines étant isolées l'une par rapport à l'autre.

4. Dispositif inductif de détection selon l'une des revendications précédentes, caractérisé en ce que le porte-bobine (2) est constitué d'un matériau déformable, en particulier pliable.

5. Dispositif inductif de détection selon l'une des revendications précédentes, caractérisé en ce qu'il est prévu au moins deux porte-bobine (2a, 2b) disposés l'un à côté de l'autre par rapport à l'objet.

6. Dispositif inductif de détection selon l'une des revendications précédentes, caractérisé en ce que le porte-bobine (2) est un plateau constitué d'un matériau électriquement non conducteur.

7. Dispositif inductif de détection selon l'une des revendications précédentes, caractérisé en ce que les bobines (1, 4) sont rapportées selon la technique du film épais.

8. Dispositif inductif de détection selon l'une des revendications précédentes, caractérisé en ce que les bobines (1, 4) sont rapportées selon la technique du film mince.

9. Dispositif inductif de détection selon l'une des revendications précédentes, caractérisé en ce qu'au moins deux bobines réceptrices (4) ont la forme de segments de couronne.

10. Dispositif inductif de détection selon la revendications 9, caractérisé en ce que quatre bobines partielles (4), ont la forme de segments de couronne et sont disposées l'une derrière l'autre - par rapport à l'objet - en deux paires avec des axes de symétrie (X1) perpendiculaires l'un à l'autre.

11. Dispositif inductif de détection selon la revendication 10, caractérisé en ce que les paires de bobines (4) sont disposées sur la face avant et sur la face arrière d'un porte-bobine (2).

12. Dispositif inductif de détection selon les revendications 9 à 11, caractérisé en ce que les bobines partielles (4) présentent respectivement au moins une portion de bobinage sensiblement parallèle au plan de symétrie.

13. Dispositif de mesure comportant un dispositif inductif de détection selon l'une des revendications précédentes, pour déterminer la position relative du dispositif de détection par rapport à un objet, étant précisé que les bobines réceptrices reliées à un circuit de traitement pour déterminer les variations de phase et/ou de tension fonctions des modifications de la position relative de l'objet et du dispositif de détection, caractérisé en ce que les bobines réceptrices (4) sont divisées en au moins deux bobines partielles, et en ce qu'il est prévu un organe de commutation (8) pour relier au choix l'une et/ou l'autre bobine partielle au circuit de traitement (amplificateur 6, amplificateur additionneur 6b).

14. Dispositif de mesure selon la revendication 13, caractérisé en ce que les bobines partielles (4) présentent des surfaces de bobine d'activités différentes par rapport à l'objet (7).

15. Dispositif de mesure selon la revendication 13 ou 14 pour la mesure de la distance entre le dispositif de détection et la surface de l'objet, ainsi que pour la mesure de la position latérale relative du dispositif de détection et d'une irrégularité de l'objet, caractérisé en ce que les bobines réceptrices (4) présentent au moins une paire de bobines partielles qui sont disposées symétriquement et à une certaine distance l'une de l'autre, en ce que la bobine réceptrice auxiliaire (4a/figure 9) est disposée à une autre distance de l'objet (7) que les bobines partielles, et en ce que l'organe de commutation (8) peut commuter sur deux positions différentes de mesure de façon telle que d'une part, pour la mesure de la position latérale relative, les signaux reçus directement ou indirectement des bobines partielles sont mis en circuit à contresens réciproque et amenées à l'entrée du dispositif de traitement (amplificateur 6), et que d'autre part, pour la mesure de la distance, les signaux reçus d'au moins l'une des bobines partielles, ou bien les signaux reçus directement ou indirectement des deux bobines partielles, sont mis en circuit en série, mais à contresens des signaux reçus de la bobine auxiliaire, et amenés à l'entrée du circuit de traitement.

16. Dispositif selon l'une des revendications 13 à 15, caractérisé en ce qu'il est prévu une pluralité de bobines partielles (4), et en ce que, comme organe de commutation (8), il est prévu un dispositif de commutation activé automatiquement, en particulier un dispositif de commutation séquentielle (scanner).
